# EUROPEAN PATENT SPECIFICATION

(11) **EP 4 263 938 B1**
(45) Date of publication and mention of the grant of the patent: **05.02.2025**
(21) Application number: 21831322.9
(22) Date of filing: 15.12.2021
(51) Int. Cl.: D21H 17/04, D21H 17/23, D21H 17/00, D21H 21/06, C08L 5/00, C08L 97/00

(54) **METHOD AND USE FOR ADJUSTING OF ZETA POTENTIAL OF FIBRE STOCK**
VERFAHREN UND ANWENDUNG ZUR EINSTELLUNG DES ZETA-POTENTIALS VON FASERSTOFFEN
MÉTHODE ET UTILISATION POUR AJUSTER LE POTENTIEL ZÊTA D'UN STOCK DE FIBRES

(30) Priority: 17.12.2020 FI 20206324
(43) Date of publication of application: 25.10.2023
(73) Proprietor: Kemira OYJ, Helsinki 00180 (FI)
(72) Inventor: VALKEALAAKSO, Timo, 33270 Tampere (FI); ASIKANIUS, Brita, 02270 Espoo (FI)
(74) Representative: Berggren Oy
(86) International application number: PCT/FI2021/050880
(87) International publication number: WO 2022/129699

(56) References cited:
- WO-A1-2015/075080
- WO-A1-89/06294

## Description

The present invention relates to a use of a lignin-carbohydrate complex and to a method for adjusting zeta potential of an aqueous fibre stock according to preambles of enclosed independent claims.

Wet strength resins and other cationic additives are added to the fibre stock in the manufacture of paper, board, and the like. Optimally, the amount of added cationic chemicals is such that the chemicals interact effectively with the anionic constituents of the fibre stock, such as fibres itself, and are retained to the web. In practice, a part of the cationic chemicals is not retained to the web but follow with the water which is drained from the web. As the water drained from the web is nowadays circulated back in the paper and board manufacturing processes to the stock preparation and/or stock dilution, there is a risk that the amount of cationic chemicals in the circulation waters of the mill increase over time. This may lead to overcationisation of the manufacturing process, which is demonstrated as positive charge of the stock filtrate water. The overcationisation of the process may result in process disturbances, such as excessive foaming or plugging of the felts.

Conventionally, problems relating to overcationisation have been solved by addition of synthetic polymers to the fibre stock and/or process waters in order to neutralize the net charge of the stock. However, there is an ever-increasing trend to reduce or even completely eliminate the use of fossil-based chemicals in the industry. In short, there is a clear need for other solutions for adjusting the zeta-potential of the fibre stock and/or the charge of the stock filtrate which would employ non-fossil-based constituents Document WO89/06294A1 discloses a method of adjusting the zeta potential of a fiber stock by means of a cationic composite polymeric compound. This document however fails to disclose an anionic lignin-carbohydrate complex.

An object of this invention is to minimise or possibly even eliminate the disadvantages existing in the prior art.

An object is also to provide an effective method for adjusting and/or controlling the zeta potential of the fibre stock.

These objects are attained with the invention having the characteristics presented below in the characterising parts of the independent claims. Some preferable embodiments are disclosed in the dependent claims.

The features recited in the dependent claims and the embodiments in the description are mutually freely combinable unless otherwise explicitly stated.

The exemplary embodiments presented in this text and their advantages relate by applicable parts to all aspects of the invention, both the use and the method, even though this is not always separately mentioned.

A typical use according to the present invention of an anionic lignin-carbohydrate complex, where lignin and carbohydrate are covalently bound with each other, is defined in claim 1 for adjusting of zeta potential of an aqueous fibre stock in manufacture of paper, board, tissue of the like.

A typical method according to the present invention for adjusting of zeta potential of an aqueous fibre stock in manufacture of paper, board, tissue of the like, is defined in claim 8 and comprises at least the steps of:
- obtaining an aqueous fibre stock,
- draining the fibre stock and forming a fibrous web, and
- introducing to the fibre stock an anionic lignin-carbohydrate complex where lignin and carbohydrate are covalently bound with each other, before the formation of the fibrous web.

Now it has been surprisingly found that it is possible to effectively adjust the zeta potential of fibre stock by introducing to the fibre stock a lignin-carbohydrate complex where lignin and carbohydrate are covalently bound with each other. It has been observed that the lignin-carbohydrate complex provides at least as good charge neutralisation effect as the conventionally used fossil-based polymers, and unexpectedly it seems that the same or even better effect could be obtained by using much smaller chemical dosages. Furthermore, the present invention provides a green bio-based alternative for fossil-based polymers and enables an increase of renewable chemicals in manufacture of paper, board, or the like. The lignin-carbohydrate complex where the lignin and carbohydrate are covalently bound with each other might probably be less palatable for the process bacteria, which might help in minimising the risk for bacterial overgrowth and formation of bacterial deposits in the manufacturing process of paper, board, or the like.

The anionic lignin-carbohydrate complex suitable for use in the present invention is a natural polymeric complex that comprises lignin and carbohydrates, preferably hemicelluloses, covalently bound with each other. The lignin-carbohydrate complex is thus a conjugate of lignin and carbohydrate(s), which are irreversibly bound which each other to a common structure. The anionic lignin-carbohydrate complex may have a branched structure. For example, the lignin or the carbohydrate may form a backbone structure for the complex and the other component, either carbohydrate or lignin, may form pendant groups, which are covalently bound to the backbone structure.

The lignin-carbohydrate complex may be formed of lignin and one or more of carbohydrates, such as hemicelluloses. The carbohydrate(s) in the lignin-carbohydrate complex may preferably be formed from monosaccharides, such as galactose, glucose, mannose, arabinose and/or xylose, and/or their fragments or residues; or the carbohydrate(s) may be said monosaccharide(s) and/or their fragments or residues. The exact amounts of the monosaccharides in the lignin-carbohydrate complex and their relative ratios depend on the wood species, e.g. hardwood/softwood, which has been used in the pulping process and from which the lignin-carbohydrate complex originates. The monosaccharides may be present in the lignin-carbohydrate complex as sugar residues, covalently bound to the lignin.

The anionic lignin-carbohydrate complex comprises various anionic functional groups selected from sulphonate groups, carboxyl groups and/or phenolic groups. The lignin-carbohydrate complex may comprise, for example, >1300 -1700 µmol/g, preferably 1400 - 1600 µmol/g of sulphonate groups; 300 - 500 µmol/g, preferably 350 - 450 µmol/g of carboxyl groups; and/or 125 - 250 µmol/g, preferably 150 - 225 µmol/g of phenolic groups.

The lignin-carbohydrate complex, suitable for use in the present invention, may be obtained from a side stream of a pulping process. In one embodiment, a suitable lignin-carbohydrate complex may be obtained by enzymatic treatment of lignin-carbohydrate material originating from a pulping process. For example, the lignin-carbohydrate complex may be obtained by isolating lignin-carbohydrate material from side streams of wood pulping processes by filtration, such as membrane filtration, and by processing the said isolated lignin-carbohydrate material by enzymatic processing employing preferably laccase enzyme. Alternatively, lignin-carbohydrate complex may be isolated from lignocellulosic material, such as wood or pulp, by using separation and fractionation methods known as such. For example, it is possible to isolate lignin-carbohydrate complexes by fractionating lignin from an industrial process, such as kraft pulping or sulphite pulping. Suitable lignin fractionating methods include, for example, solvent fractionation or precipitation fractionation. In solvent fractionation various organic solvents and their binary mixtures may be employed, such as acetone-hexane, acetone-water, ethanol-water, propyleneglycol monomethyl ether-water. Such fractionation method is described, inter alia, in Int. J. Biol. Macromolecules 106 (2018) 979-987.

According to one preferable embodiment of the invention the anionic lignin-carbohydrate complex is an anionic lignosulfonate-carbohydrate complex. It can be obtained, for example, by membrane filtration of a pre-hydrolysis mixture from a sulphite pulping process of wood, and thereafter treated by an enzymatic oxidative treatment, preferably by laccase enzyme. Preferably the filtered pre-hydrolysis mixture is obtained from a sulphite pulping process of wood. The pre-hydrolysis mixture may contain wood-based components and pulping chemicals. Suitable anionic lignosulfonate-carbohydrate complex is disclosed e.g. in BioResources 13(4), 7606 - 7627, 2018, and they are commercially available from Ecohelix AB, Sweden.

According to one embodiment the anionic lignin-carbohydrate complex may have a branched structure.

The anionic lignin-carbohydrate complex has an anionic charge density less than - 0.2 meq/g, preferably less than -0.5 meq/g, more preferably less than -0.85 meq/g, measured at pH 7. The anionic charge density of the complex may be from -0.2 meq/g to -2.5 meq/g, preferably from -0.5 meq/g to -2.4 meq/g, more preferably from -0.85 meq/g to -2.3 meq/g measured at pH 7. Sometimes the anionic charge density of the complex may be from -0.5 meq/g to -1.75 meq/g, preferably from -0.85 to -1.5 meq/g, measured at pH 7. The anionic lignin-carbohydrate complex may even have the anionic charge density from -2.0 meq/g to -2.3 meq/g, preferably from -2.1 to - 2.2 meq/g or to -2.15 meq/g, measured at pH 7. All charge density values are given as per dry substance, and measured by using a Mütek Particle Charge Detector.

The lignin-carbohydrate complex has a weight average molecular weight >3500 g/mol, preferably >4000 g/mol, more preferably > 5000 g/mol. The lignin-carbohydrate complex may have the weight average molecular weight MW in a range of 3500 - 90000 g/mol, preferably 4 000 - 80 000 g/mol, more preferably 5000 - 70 000 g/mol.

According to one preferable embodiment of the lignin-carbohydrate complex may preferably have relatively high molecular weight. It is assumed, without wishing to be bound by a theory, that the high molecular weight, together with the covalent bond between the lignin and carbohydrate, provides at least some of the surprising effects that have been observed. The lignin-carbohydrate complex may have a weight average molecular weight MW >8000 g/mol, preferably >10 000 g/mol, more preferably >12 000 g/mol or >15 000 g/mol, sometimes even >20000 g/mol or >25 000 g/mol. The lignin-carbohydrate complex may have the weight average molecular weight MW in a range of 8 000 - 50 000 g/mol or 10 000 - 45 000 g/mol, preferably 12 000 - 40 000 g/mol or 15 000 - 37 000 g/mol. Sometimes the lignin-carbohydrate complex may have the weight average molecular weight MW in a range of 20 000 - 45 000 g/mol, preferably 25 000 - 40 000 g/mol, more preferably 25 000 - 35 000 g/mol or 25 000 - 27 000 g/mol. It is also possible that the lignin-carbohydrate complex may have the weight average molecular weight MW in a range of 15 000 - 120 000 g/mol or 20 000 - 90 000 g/mol, preferably 25 000 - 80 000 g/mol, more preferably 30 000 - 70 000 g/mol.

The lignin-carbohydrate complex comprises lignin and carbohydrates, preferably hemicellulose, in a ratio from 90:10 to 10:90, preferably from 80:20 to 20:80, more preferably from 75:25 to 25:75 (lignin:carbohydrate). According to the invention the anionic lignin-carbohydrate complex comprises at least 10 weight-%, preferably at least 15 weight-% of carbohydrate(s), preferably hemicellulose(s), calculated from total dry weight of the complex. The lignin-carbohydrate complex may comprise carbohydrate(s) in a range of 10 - 40 weight-%, preferably 10 - 30 weight-% or 15 - 25 weight-%, calculated from total dry weight of the complex.

The lignin-carbohydrate complex may be introduced to the fibre stock in any suitable manner before the formation of the fibrous web, i.e. before the headbox of the paper, board, or tissue machine. The anionic lignin-carbohydrate complex may be added to the thick fibre stock, i.e. to the fibre stock, which has consistency of ≥30 g/l. Alternatively the thick fibre stock may be diluted with water, and the anionic lignin-carbohydrate complex is introduced to the diluted fibre stock having consistency less than 30 g/l, i.e. thin stock. It is also possible that the lignin-carbohydrate complex is introduced both to the thick stock and to the thin stock. It is also possible to add the lignin-carbohydrate complex to the circulating process water and/or dilution water, whereby the lignin-carbohydrate complex comes into contact with fibres of the fibre stock at the preparation or dilution of the fibre stock.

Before the addition of the anionic lignin-carbohydrate complex to the fibre stock the charge density of the fibre stock filtrate may be from -20 µeq/l to +20 µeq/l, preferably from -10 µeq/l to +15 µeq/l, more preferably from -5 µeq/l to +10 µeq/l. It has been observed that the use of lignin-carbohydrate complex for adjusting the zeta potential of the fibre stock is especially suitable for fibre stocks where the charge density of the fibre stock filtrate is around zero or slightly positive. Generally, the problems associated with the overcationisation are especially pronounced on this charge density region. In the context of the present application the charge density of the fibre stock filtrate is measured by filtrating the fibre stock. The obtained filtrate is titrated with poly-electrolyte, e.g. polydiallyldimethylammonium chloride (poly-DADMAC), and the apparent charge density of the filtrate, i.e. the fibre stock, is measured by using by using a Particle Charge Detector by Mütek.

The zeta potential of the fibre stock before the addition of the anionic lignin-carbohydrate complex may be from -2 to +5 mV, preferably from -1 to +4 mV, more preferably from -1 to +3 mV. In the context of the present application the zeta potential of the fibre stock filtrate is measured by Particle Charge Detector by Mütek.

The anionic lignin-carbohydrate complex is added to the fibre stock in amount of 0.1 - 5 kg/ton dry fibre, preferably 0.2 - 0.4 kg/ton dry fibre, more preferably 0.3 - 2 kg/ton dry fibre.

According to one preferable embodiment of the present invention the zeta potential of the fibre stock is negative, preferably from -100 to -1 mV, more preferably from - 75 to -20 mV, after the addition of the anionic lignin-carbohydrate complex to the fibre stock. This zeta potential level ensures the optimal process operation and prevention of the deposit formation. The charge density of the fibre stock filtrate, after the addition of the lignin-carbohydrate complex may be less than -10 µeq/l, preferably less than -15 µeq/l, more preferably less than -20 µeq/l.

The anionic lignin carbohydrate complex may be added to the fibre stock before other chemical additives, such as wet strength resins, dry strength agents, cationic starch, internal sizes or the like. Alternatively, the anionic lignin carbohydrate complex may be added to the fibre stock after the addition of other chemical additives, such as wet strength resins, dry strength agents, cationic starch, internal sizes or the like.

The fibre stock may comprise fibres originating from recycled paper, old corrugated containerboard (OCC), unbleached kraft pulp, bleached kraft pulp, neutral sulphite semi chemical (NCCS) pulp, unbleached sulphite pulp, bleached sulphite pulp, and/or mechanical pulp. Preferably the fibre stock comprises at least 80 % recycled fibres, more preferably at least 90 % recycled fibres.

### EXPERIMENTAL

Some embodiments of the invention are further described in the following nonlimiting experiments.

Laboratory experiments were performed to compare the performance of an anionic biobased lignin-carbohydrate complex, LCC, obtained from Ecohelix AB, Sweden, and an anionic polyacrylamide (MW ca 450 000 g/mol), PAM, obtained from Kemira Oyj, for adjusting the zeta potential of the fibre stock.

Following pulp samples were used in the experiments:
Ex. 1: Pulp sample made in the laboratory comprising 85 weight-% of ground wood pulp and 15 weight-% of chemical pulp, calculated as dry.
Ex. 2: Pulp sample obtained from a board mill headbox pulp.
Ex. 3: Pulp sample obtained from a board mill machine pulp
Ex. 4: Pulp sample obtained from a board mill.

Each pulp sample was diluted to 0.3 weight-% fibre consistency and the chemical to be tested was added at varying dosages. Zeta potential of the pulp after the chemical addition was analysed by Fibre Potential analyzer. The results are shown in Table 1.

**Table 1 Results of the Experiments 1 - 4.**

| Dose, kg/t | **Experiment 1** | | **Experiment 2** | | **Experiment 3** | | **Experiment 4** | |
|---|---|---|---|---|---|---|---|---|
| | PAM | LCC | PAM | LCC | PAM | LCC | PAM | LCC |
| 0 | - | - | -18.3 | -18.3 | - | - | -13.2 | -13.2 |
| 0.5 | 3 | 1.6 | - | - | - | - | - | - |
| 1 | -2.0 | -5.8 | -21.1 | -19.9 | -27.0 | -28.4 | -14.8 | -14.9 |
| 1.25 | -3.5 | -8.6 | - | - | - | - | - | - |
| 1.5 | -6.2 | -11.4 | - | - | - | - | - | - |
| 2 | - | - | - | - | - | - | -16.4 | -16.4 |
| 3 | - | - | -23.3 | -21.7 | -28.0 | -28.9 | -17.0 | -17.8 |
| 4 | - | - | - | - | - | - | -17.5 | -18.4 |
| 5 | - | - | -23.9 | -21.9 | -28.0 | -28.9 | -18.9 | -19.0 |

It can be seen from Table 1 that the lignin-carbohydrate complex LCC is able effectively adjusting the zeta potential of the fibre stock to the desired level. For obtaining the same zeta potential value, the required LCC dose is similar or even smaller than the required dose of anionic polyacrylamide.

The project leading to this application has received funding from the Bio Based Industries Joint Undertaking (JU) under grant agreement No 837866. The JU receives support from the European Union's Horizon 2020 research and innovation programme and the Bio Based Industries Consortium.

## Claims

1. Use of an anionic lignin-carbohydrate complex, where lignin and carbohydrate are covalently bound with each other, in amount of 0.1 - 5 kg/ton dry fibre, for adjusting of zeta potential of an aqueous fibre stock in manufacture of paper, board, tissue of the like, wherein the anionic lignin-carbohydrate complex comprises at least 10 weight-% of carbohydrate, calculated from total dry weight of the complex, and anionic functional groups selected from sulphonate groups, carboxyl groups and/or phenolic groups; and wherein the anionic lignin-carbohydrate complex has a lignin:carbohydrate ratio from 90:10 to 10:90, a weight average molecular weight MW >3500 g/mol, and an anionic charge density less than -0.2 meq/g, measured at pH 7.

2. Use according to claims 1, **characterised in that** the anionic lignin-carbohydrate complex has the weight average molecular weight MW >4000 g/mol, preferably > 5000 g/mol.

3. Use according to claim 2, **characterised in that** the lignin-carbohydrate complex has a weight average molecular weight MW in a range of 4000 - 90 000 g/mol, preferably 4000 - 80 000 g/mol, more preferably 5000 - 70 000 g/mol.

4. Use according to any of preceding claims 1 - 3, **characterised in that** the anionic lignin-carbohydrate complex has the anionic charge density less than -0.5 meq/g, preferably less than -0.85 meq/g, measured at pH 7.

5. Use according to any of preceding claims 1 - 4, **characterised in that** the anionic lignin-carbohydrate complex comprises at least 15 weight-% of carbohydrate, calculated from total dry weight of the complex.

6. Use according to any of preceding claims 1 - 5, **characterised in that** the anionic lignin-carbohydrate complex has a lignin:carbohydrate ratio from 80:20 to 20:80, preferably from 75:25 to 25:75.

7. Use according to any of preceding claims 1 - 6, **characterised in that** the lignin-carbohydrate complex comprises galactose, glucose, mannose, arabinose and/or xylose and/or their fragments and/or residues, which are preferably covalently bound to a lignin backbone.

8. Method for adjusting of zeta potential of an aqueous fibre stock in manufacture of paper, board, tissue of the like, the method comprising steps of:
- obtaining an aqueous fibre stock,
- draining the fibre stock and forming a fibrous web,
**characterised in**
introducing by adding in amount of 0.1 - 5 kg/ton dry fibre to the fibre stock an anionic lignin-carbohydrate complex, where lignin and carbohydrate are covalently bound with each other, before the formation of the fibrous web; and wherein the anionic lignin-carbohydrate complex comprises at least 10 weight-% of carbohydrate, calculated from total dry weight of the complex, and anionic functional groups selected from sulphonate groups, carboxyl groups and/or phenolic groups; and wherein the anionic lignin-carbohydrate complex has a lignin:carbohydrate ratio from 90:10 to 10:90, a weight average molecular weight MW >3500 g/mol, and an anionic charge density less than -0.2 meq/g, measured at pH 7.

9. Method according to claim 8, **characterised in** adding the anionic lignin-carbohydrate complex to the fibre stock, which has consistency of at least 30 g/l.

10. Method according to claim 8, **characterised in** diluting the fibre stock with water and adding the anionic lignin-carbohydrate complex to the diluted fibre stock having consistency less than 30 g/l.

11. Method according to any of preceding claims 8, 9 or 10, **characterised in that** before the addition of the anionic lignin-carbohydrate complex to the fibre stock the charge density of the fibre stock filtrate is from -20 to +20 µeq/l, preferably from -10 to +15 µeq/l, more preferably from -5 to +10 µeq/l.

12. Method according to any of preceding claims 8 - 11, **characterised in that** after the addition of the anionic lignin-carbohydrate complex to the fibre stock the zeta potential of the fibre stock is negative, preferably from -100 to -1 mV, more preferably from -75 to -20 mV.

13. Method according to any of preceding claims 8 - 12, **characterised in that** the anionic lignin-carbohydrate complex is added in amount of 0.2 - 0.4 kg/ton dry fibre, preferably 0.3 - 2 kg/ton dry fibre.

14. Method according to any of preceding claims 8 - 13, **characterised in that** the anionic lignin-carbohydrate complex is added to the fibre stock before other chemical additives, such as wet strength resins, dry strength agents, cationic starch.

15. Method according to any of preceding claims 8 - 14, **characterised in that** the fibre stock comprises fibres originating from recycled paper, old corrugated containerboard (OCC), unbleached kraft pulp, bleached kraft pulp, neutral sulphite semi chemical (NCCS) pulp, unbleached sulphite pulp, bleached sulphite pulp, and/or mechanical pulp, wherein the fibre stock comprises preferably at least 80 % recycled fibres, more preferably at least 90 % recycled fibres.

## Patentansprüche

1. Verwendung eines anionischen Lignin-Kohlenhydrat-Komplexes, wobei Lignin und Kohlenhydrat kovalent aneinander gebunden sind, in einer Menge von 0,1 bis 5 kg/Tonne Trockenfaser zum Einstellen des zeta-Potentials eines wässrigen Faserstoffs bei der Fertigung von Papier, Pappe, Tissue oder dergleichen, wobei der anionische Lignin-Kohlenhydrat-Komplex mindestens 10 Gew.% Kohlenhydrat, berechnet aus dem Gesamttrockengewicht des Komplexes, und anionische funktionelle Gruppen ausgewählt aus Sulfonatgruppen, Carboxylgruppen und/oder phenolischen Gruppen umfasst; und wobei der anionische Lignin-Kohlenhydrat-Komplex ein Lignin:Kohlenhydrat-Verhältnis von 90:10 bis 10:90, ein durchschnittliches Molekulargewicht (Gewichtsmittel) MW > 3500 g/Mol und eine anionische Ladungsdichte kleiner als -0,2 mÄq/g, gemessen bei einem pH-Wert von 7, hat.

2. Verwendung nach Anspruch 1, **dadurch gekennzeichnet, dass** der anionische Lignin-Kohlenhydrat-Komplex ein durchschnittliches Molekulargewicht (Gewichtsmittel) MW > 4000 g/mol, vorzugsweise > 5000 g/mol hat.

3. Verfahren nach Anspruch 2, **dadurch gekennzeichnet, dass** der Lignin-Kohlenhydrat-Komplex ein durchschnittliches Molekulargewicht (Gewichtsmittel) MW in einem Bereich von 4000 bis 90 000 g/mol, vorzugsweise 4000 bis 80 000 g/mol, bevorzugter 5000 bis 70 000 g/mol hat.

4. Verwendung nach einem der vorhergehenden Ansprüche 1 bis 3, **dadurch gekennzeichnet, dass** der anionische Lignin-Kohlenhydrat-Komplex eine anionische Ladungsdichte kleiner als -0,5 mÄq/g, vorzugsweise kleiner als -0,85 mÄq/g hat, gemessen bei einem pH-Wert von 7.

5. Verwendung nach einem der vorhergehenden Ansprüche 1 bis 4, **dadurch gekennzeichnet, dass** der anionische Lignin-Kohlenhydrat-Komplex zumindest 15 Gew.% Kohlenhydrat umfasst, berechnet aus dem Gesamttrockengewicht des Komplexes.

6. Verwendung nach einem der vorhergehenden Ansprüche 1 bis 5, **dadurch gekennzeichnet, dass** der anionische Lignin-Kohlenhydrat-Komplex ein Lignin:Kohlenstoff-Verhältnis von 80:20 bis 20:80, vorzugsweise 75:25 bis 25:75 hat.

7. Verwendung nach einem der vorhergehenden Ansprüche 1 bis 6, **dadurch gekennzeichnet, dass** der Lignin-Kohlenhydrat-Komplex Galactose, Glucose, Mannose, Arabinose und/oder Xylose und/oder deren Fragmente und/oder Reste umfasst, die vorzugsweise kovalent an ein Ligningrundgerüst gebunden sind.

8. Verfahren zum Einstellen des zeta-Potentials eines wässrigen Faserstoffs bei der Fertigung von Papier, Pappe, Tissue oder dergleichen, wobei das Verfahren die Schritte umfasst:
- Erhalten eines wässrigen Faserstoffs,
- Entwässern des Faserstoffs und Bilden einer faserigen Bahn,
**dadurch gekennzeichnet, dass**
ein anionischer Lignin-Kohlenhydrat-Komplex, wobei Lignin und Kohlenhydrat kovalent aneinander gebunden sind, durch Zugeben in einer Menge von 0,1 bis 5 kg/Tonne Trockenfaser zu dem Faserstoff eingebracht wird, bevor die faserige Bahn gebildet wird; und wobei der anionische Lignin-Kohlenhydrat-Komplex mindestens 10 Gew.% Kohlenhydrat, berechnet aus dem Gesamttrockengewicht des Komplexes, und anionische funktionelle Gruppen ausgewählt aus Sulfonatgruppen, Carboxylgruppen und/oder phenolischen Gruppen umfasst; und wobei der anionische Lignin-Kohlenhydrat-Komplex ein Lignin:Kohlenhydrat-Verhältnis von 90:10 bis 10:90, ein durchschnittliches Molekulargewicht (Gewichtsmittel) MW > 3500 g/mol und eine anionische Ladungsdichte kleiner als -0,2 mÄq/g hat, gemessen bei einem pH-Wert von 7.

9. Verfahren nach Anspruch 8, **gekennzeichnet durch** Zugeben des anionischen Lignin-Kohlenhydrat-Komplexes zu dem Faserstoff, der eine Konsistenz von mindestens 30 g/l hat.

10. Verfahren nach Anspruch 8, **gekennzeichnet durch** Verdünnen des Faserstoffs mit Wasser und Zugeben des anionischen Lignin-Kohlenhydrat-Komplexes zu dem verdünnten Faserstoff mit einer Konsistenz von weniger als 30 g/l.

11. Verfahren nach einem der vorhergehenden Ansprüche 8, 9 oder 10, **dadurch gekennzeichnet, dass** vor dem Zugeben des anionischen Lignin-Kohlenhydrat-Komplexes zu dem Faserstoff die Ladungsdichte des Faserstofffiltrats -20 bis +20 µÄq/l, vorzugsweise -10 bis +15 µÄq/l, bevorzugter -5 bis +10 µÄq/l beträgt.

12. Verfahren nach einem der vorhergehenden Ansprüche 8 bis 11, **dadurch gekennzeichnet, dass** nach dem Zugeben des anionischen Lignin-Kohlenhydrat-Komplexes zu dem Faserstoff das zeta-Potential des Faserstoffs negativ ist, vorzugsweise von -100 bis -1 mV, bevorzugter -75 bis -20 mV.

13. Verfahren nach einem der vorhergehenden Ansprüche 8 bis 12, **dadurch gekennzeichnet, dass** der anionische Lignin-Kohlenhydrat-Komplex in einer Menge von 0,2 bis 0,4 kg/Tonne Trockenfaser, vorzugsweise 0,3 bis 2 kg/Tonne Trockenfaser, zugegeben wird.

14. Verfahren nach einem der vorhergehenden Ansprüche 8 bis 13, **dadurch gekennzeichnet, dass** der anionische Lignin-Kohlenhydrat-Komplex dem Faserstoff vor anderen chemischen Additiven zugegeben wird, wie Nassfestigkeitsharzen, Trockenfestigkeitsmitteln, kationischer Stärke.

15. Verfahren nach einem der vorhergehenden Ansprüche 8 bis 14, **dadurch gekennzeichnet, dass** der Faserstoff Fasern umfasst, die aus recyceltem Papier, altem Wellpapperohpapier (OCC), ungebleichtem Kraft-Zellstoff, gebleichtem Kraft-Zellstoff, neutralem Sulfit-Halbzellstoff (NCCS), ungebleichtem Sulfitzellstoff, gebleichtem Sulfitzellstoff und/oder Holzstoff kommen, wobei der Faserstoff vorzugsweise mindestens 80 % recycelte Fasern, bevorzugter mindestens 90 % recycelte Fasern umfasst.

## Revendications

1. Utilisation d'un complexe glucide-lignine anionique, où une lignine et un glucide sont liés de manière covalente l'un avec l'autre, en une quantité de 0,1 à 5 kg/tonne de fibre sèche, pour l'ajustement du potentiel zêta d'un stock de fibres aqueuses dans la fabrication de papier, de carton, de mouchoirs ou similaires, le complexe glucide-lignine anionique comprenant au moins 10 % en poids de glucide, calculé par rapport au poids sec total du complexe, et des groupes fonctionnels anioniques choisis parmi des groupes sulfonate, des groupes carboxyle et/ou des groupes phénoliques ; et le complexe glucide-lignine anionique ayant un rapport de lignine : glucide de 90 : 10 à 10 : 90, un poids moléculaire moyen en poids MW > 3 500 g/mole, et une densité de charge anionique inférieure à -0,2 méq/g, mesurée à pH 7.

2. Utilisation selon la revendication 1, **caractérisée en ce que** le complexe glucide-lignine anionique possède le poids moléculaire moyen en poids MW > 4 000 g/mole, préférablement > 5 000 g/mole.

3. Utilisation selon la revendication 2, **caractérisée en ce que** le complexe glucide-lignine possède un poids moléculaire moyen en poids MW dans une plage de 4 000 à 90 000 g/mole, préférablement 4 000 à 80 000 g/mole, plus préférablement 5 000 à 70 000 g/mole.

4. Utilisation selon l'une quelconque des revendications précédentes 1 à 3, **caractérisée en ce que** le complexe glucide-lignine anionique possède la densité de charge anionique inférieure à -0,5 méq/g, préférablement inférieure à -0,85 méq/g, mesurée à pH 7.

5. Utilisation selon l'une quelconque des revendications précédentes 1 à 4, **caractérisée en ce que** le complexe glucide-lignine anionique comprend au moins 15 % en poids de glucide, calculé par rapport au poids sec total du complexe.

6. Utilisation selon l'une quelconque des revendications précédentes 1 à 5, **caractérisée en ce que** le complexe glucide-lignine anionique possède un rapport de lignine : glucide de 80 : 20 à 20 : 80, préférablement de 75 : 25 à 25 : 75.

7. Utilisation selon l'une quelconque des revendications précédentes 1 à 6, **caractérisée en ce que** le complexe glucide-lignine comprend du galactose, du glucose, du mannose, de l'arabinose et/ou du xylose et/ou leurs fragments et/ou résidus, qui sont préférablement liés de manière covalente à un squelette de lignine.

8. Procédé pour l'ajustement du potentiel zêta d'un stock de fibres aqueuses dans la fabrication de papier, de carton, de mouchoirs ou similaires, le procédé comprenant des étapes de :
- obtention d'un stock de fibres aqueuses,
- drainage du stock de fibres et formation d'une toile fibreuse,
**caractérisé par**
l'introduction par ajout en une quantité de 0,1 à 5 kg/tonne de fibre sèche au stock de fibres d'un complexe glucide-lignine anionique, où une lignine et un glucide sont liés de manière covalente l'un avec l'autre, avant la formation de la toile fibreuse ; et le complexe glucide-lignine anionique comprenant au moins 10 % en poids de glucide, calculé par rapport au poids sec total du complexe, et des groupes fonctionnels anioniques choisis parmi des groupes sulfonate, des groupes carboxyle et/ou des groupes phénoliques ; et le complexe glucide-lignine anionique ayant un rapport de lignine : glucide de 90 : 10 à 10 : 90, un poids moléculaire moyen en poids MW > 3 500 g/mole, et une densité de charge anionique inférieure à -0,2 méq/g, mesurée à pH 7.

9. Procédé selon la revendication 8, **caractérisé par** l'ajout du complexe glucide-lignine anionique au stock de fibres, qui possède une consistance d'au moins 30 g/l.

10. Procédé selon la revendication 8, **caractérisé par** la dilution du stock de fibres avec de l'eau et l'ajout du complexe glucide-lignine anionique au stock de fibres dilué ayant une consistance inférieure à 30 g/l.

11. Procédé selon l'une quelconque des revendications précédentes 8, 9 ou 10, **caractérisé en ce qu'**avant l'ajout du complexe glucide-lignine anionique au stock de fibres, la densité de charge du filtrat de stock de fibres est de -20 à +20 µéq/l, préférablement de -10 à +15 µéq/l, plus préférablement de -5 à +10 µéq/l.

12. Procédé selon l'une quelconque des revendications précédentes 8 à 11, **caractérisé en ce qu'**après l'ajout du complexe glucide-lignine anionique au stock de fibres, le potentiel zêta du stock de fibres est négatif, préférablement de -100 à -1 mV, plus préférablement de -75 à -20 mV.

13. Procédé selon l'une quelconque des revendications précédentes 8 à 12, **caractérisé en ce que** le complexe glucide-lignine anionique est ajouté en une quantité de 0,2 à 0,4 kg/tonne de fibre sèche, préférablement 0,3 à 2 kg/tonne de fibre sèche.

14. Procédé selon l'une quelconque des revendications précédentes 8 à 13, **caractérisé en ce que** le complexe glucide-lignine anionique est ajouté au stock de fibres avant d'autres additifs chimiques, tels que des résines résistantes à l'humidité, des agents de résistance à sec, un amidon cationique.

15. Procédé selon l'une quelconque des revendications précédentes 8 à 14, **caractérisé en ce que** le stock de fibres comprend des fibres provenant de papier recyclé, de vieux carton-caisse ondulé (OCC), de pâte kraft non blanchie, de pâte kraft blanchie, de pâte semi-chimique au sulfure neutre (NCCS), de pâte de sulfite non blanchie, de pâte de sulfite blanchie et/ou de pâte mécanique, le stock de fibres comprenant préférablement au moins 80 % de fibres recyclées, plus préférablement au moins 90 % de fibres recyclées.
